(19) Europäisches Patentamt / European Patent Office / Office européen des brevets

(11) **EP 2 629 071 B1**

## (12) EUROPEAN PATENT SPECIFICATION

(45) Date of publication and mention
of the grant of the patent:
**10.09.2014 Bulletin 2014/37**

(51) Int Cl.:
***G01H 17/00*** (2006.01)

(21) Application number: **12155835.7**

(22) Date of filing: **16.02.2012**

(54) **Condition monitoring of anti-vibration mounts**

Überwachung des Zustands von Schwingungsdämpfungslagern

Surveillance de l'état de montages anti-vibrations

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.08.2013 Bulletin 2013/34**

(73) Proprietor: **GE Energy Power Conversion Technology Limited
Rugby
Warwickshire CV21 1BU (GB)**

(72) Inventor: **Bradley, Stuart Ian
Leicester, Leicestershire LE17 5AJ (GB)**

(74) Representative: **Serjeants LLP
25 The Crescent
King Street
Leicester, LE1 6RX (GB)**

(56) References cited:
**EP-A1- 2 267 871**

- FERREIRA C ET AL: "Sensing methodologies to determine automotive damper condition under vehicle normal operation", SENSORS AND ACTUATORS A, ELSEVIER SEQUOIA S.A., LAUSANNE, CH, vol. 156, no. 1, 1 November 2009 (2009-11-01), pages 237-244, XP026766056, ISSN: 0924-4247, DOI: 10.1016/J.SNA.2009.03.035 [retrieved on 2009-04-19]
- EKIMOV A E ET AL: "METHODS FOR EVALUATING AND MONITORING THE EFFECTIVENESS OF VIBRATION MOUNTS ON THE BASIS OF THE RECIPROCITY PRINCIPLE", SOVIET PHYSICS ACOUSTICS, AMERICAN INSTITUTE OF PHYSICS, NEW YORK, NY, US, vol. 35, no. 1, 1 January 1989 (1989-01-01), pages 24-26, XP000071082, ISSN: 0038-562X
- COLEMAN D M ET AL: "Design of a large, rigid, modular optical bed for versatile optical and spectroscopic experimentation", SPECTROCHIMICA ACTA. PART B: ATOMIC SPECTROSCOPY, NEW YORK, NY, US, US, vol. 33, no. 5, 1 January 1978 (1978-01-01), pages 127-142, XP026609076, ISSN: 0584-8547, DOI: 10.1016/0584-8547(78)80037-8 [retrieved on 1978-01-01]

**Description**

Technical Field

The invention relates to the condition monitoring of anti-vibration mounts, typically of the sort used in suspension structures for supporting the stator of a rotating electrical machine such as a motor or generator.

Background Art

Sandwich anti-vibration mounts are well known for industrial applications. For example, they can be located underneath diesel engines or generator sets to provide a resilient suspension. A typical sandwich mount consists of one or more elastomeric layers formed from rubber or polymer located between two rigid end plates. In some cases, a rigid plate is interleaved between adjacent elastomeric layers for increased loading capability. Sandwich mounts can be used either in compression or shear, or a combination of both.

A stator assembly for a rotating electrical machine will normally be mounted to an external support frame. Sandwich mounts can be used to minimise the amount of vibration transferred into the support frame, effectively decoupling the stator assembly from the support frame. More particularly, sandwich mounts can be located between the external support frame and a part of the stator such that they experience compression loading in a substantially tangential direction of the stator and radial shear loading in a substantially radial direction of the stator during operation of the rotating electrical machine.

The sandwich mounts are fitted within the external support frame or structure which makes them very difficult to visually inspect or monitor their condition. There is therefore a need for an improved method of condition monitoring.

Ferreira C. et al: "Sensing methodologies to determine automotive damper condition under vehicle normal operation" (Sensors and Actuators A: Physical, Elsevier Sequoia S.A., Lausanne, CH, vol. 156, no. 1, 1 November 2009, pages 237-244) discloses a method of assessing the condition of shock absorbers based on acceleration, temperature and pressure sensing.

Ekimov A. E. et al: "Methods for evaluating and monitoring the effectiveness of vibration mounts on the basis of the reciprocity principle" (Soviet Physics Acoustics, American Institute of Physics, New York, NY, US, vol. 35, no. 1, 1 January 1989, pages 24-26) discloses a vibration-isolation monitoring technique using the results of reciprocity measurements.

Coleman D. M. et al: "Design of a large, rigid, modular optical bed for versatile optical and spectroscopic experimentation" (Spectrochemica Acta. Part B: Atomic Spectroscopy, New York, NY, US, vol. 33, no. 5, 1 January 1978, pages 127-142) discloses a mechanically-rigid and referenceable, vibrationally-isolated, modular optical support bed which has a demonstrated significant utility in research on the physical-chemical nature of the atmospheric pressure spark discharge.

EP 2267871 discloses a suspension structure for mounting the stator of a rotating electrical machine, e.g., a motor or generator. The suspension structure includes at least one sandwich anti-vibration mount oriented relative to the stator such that it experiences compression loading in a substantially tangential direction of the stator and radial shear loading in a substantially radial direction of the stator.

Summary of the Invention

The present invention provides condition monitoring of an anti-vibration mount comprising the steps of: determining a first set of effectiveness data indicative of the effectiveness of the anti-vibration mount by: measuring or deriving input data indicative of the amplitude of input vibrations that are applied to the anti-vibration mount (e.g. from associated apparatus or equipment to which the mount is secured) and output data indicative of the amplitude of corresponding output vibrations of the anti-vibration mount (e.g. the vibrations that are transferred into an external support frame of the associated apparatus or equipment), the input and output data being measured or derived over a first period of time; and using the input and output data to determine the first set of effectiveness ;
measuring or deriving a first operating temperature of the anti-vibration mount;
using the first operating temperature to normalise the first set of effectiveness data; and monitoring the operating condition of the anti-vibration mount on the basis of the normalised first set of effectiveness data.

In one example, the operating condition of the mount can be monitored by comparing successive sets of effectiveness data determined using input and output data collected over different time periods. Successive sets of effectiveness data are determined periodically at time intervals and then compared with one or more previous sets of effectiveness data, which are typically stored (e.g. in a suitable memory), so that any deterioration in the dynamic stiffness of the mount can be identified. More particularly, the condition monitoring can further comprise the steps of determining a second set of effectiveness data indicative of the effectiveness of the anti-vibration mount by measuring or deriving input data indicative of the amplitude of input vibrations that are applied to the anti-vibration mount and output data indicative of the amplitude of corresponding output vibrations of the anti-vibration mount, the input and output data being measured or derived over a second period of time, different from the first period of time. The input and output data measured or derived over the second period of time can be used to determine the second set of effectiveness data. Monitoring the operating condition of the mount can then be carried out on the basis of the first and second sets of effectiveness data. Further sets of effectiveness data can be determined in a similar manner. In another example, the first set of effectiveness data can be processed or analysed to see if the mount is meeting minimum requirements for dynamic stiffness or other operating characteristics.

In general terms it will be appreciated that the relationship between the amplitude of input vibrations and the corresponding output vibrations depends on how effective the anti-vibration mount is at minimising the transfer of vibrations. In other words, if the anti-vibration mount is operating correctly then the amplitude of the output vibrations should be significantly less than the amplitude of the input vibrations. The effectiveness of the anti-vibration mount will typically decrease over time and the present invention provides a useful way of monitoring that effectiveness without the need for visual inspection, and also of allowing its service life to be predicted.

Sensors (typically high-frequency accelerometers) can be mounted at suitable locations at or adjacent the anti-vibration mount where they will experience the input and output vibrations. The sensors can be physically integrated into the anti-vibration mount or mounted to parts of an external support frame and associated apparatus or equipment to which the anti-vibration mount is secured. The input and output data necessary for condition monitoring can be obtained or derived from sensors that provide *inter alia* acceleration or amplitude measurements. For example, electronic equipment that is used to filter and process acceleration measurements can do the necessary integration. The sensors can be connected to external electronic equipment or instrumentation by any suitable wired (e.g. using cables) or wireless arrangement. Input and output data will typically be collected over a period of time during which input vibrations are being applied to the mount, e.g. while the associated apparatus or equipment that is the cause of the input vibrations is operational. In practice, input and output data can be collected continuously or only during periods of time when input vibrations are being applied. The input and output data can be stored (e.g. in a suitable memory) before being used by a suitable processor unit to determine the effectiveness data. The time periods over which the input and output data is measured or derived to determine each set of effectiveness data can be discrete or overlapping. The input and output data can be collected in the time domain before optionally being converted into another domain, typically but not exclusively, the frequency domain, using any suitable transform (e.g. a fast Fourier transform (FFT), wavelet transformer or a modified Hilbert transform) for further processing.

The effectiveness of the anti-vibration mount will depend on its dynamic stiffness. Over the service life of the anti-vibration mount the dynamic stiffness will deteriorate as a result of creep and fatigue, for example. Dynamic stiffness of the anti-vibration mount will depend on the frequency and amplitude (or displacement) of the input vibrations, and also on the operating temperature of the anti-vibration mount. The dynamic stiffness has a non-linear relationship with the frequency of the input vibrations and depends on internal resonances, standing waves and mass effects that vary with the operating condition of the anti-vibration mount. The fact that dynamic stiffness also depends on amplitude means that relationship between the input and output vibrations will depend on the amplitude of each input vibration, e.g. the anti-vibration mount may have a large dynamic stiffness for input vibrations having small amplitude and a small dynamic stiffness for input vibrations having large amplitude.

The input vibrations applied to the anti-vibration mount over a period of time will typically have several frequency components. The output vibrations will also have several frequency components, some of which will be the same as those of the input vibrations -- but having different amplitudes as a result of the dynamic stiffness of the anti-vibration mount -- but others can be introduced by the dynamic stiffness of the anti-vibration mount itself. For example, the output vibrations can include frequency components that are introduced by the anti-vibration mount as a result of mass effects that depend on the natural frequency of the elastomeric material (e.g. rubber or polymer layers) in the mount and/or standing wave effects.

If the input and output data collected over a particular time period is converted into the frequency domain then the frequency components of the input and output vibrations can be selectively isolated. The effectiveness data can be derived using one or more of the frequency components of the input and output data. (If the input and output data is converted into a domain other than the frequency domain as mentioned above then components of the input and output vibrations in that transform domain can be selectively isolated and used to derive the effectiveness data. Any reference below to frequency components of the input and output data should be understood to mean components in any other transform domain where applicable.) In one example, the input and output data at just one of the frequency components can be isolated and then used to determine the set of effectiveness data for the particular period of time over which the input and output data was collected. If the anti-vibration mount is used to decouple the stator assembly of a rotating electrical machine (e.g. a motor or generator) from an external support frame then the chosen frequency component could be the pole pass frequency -- which is equal to the slip frequency times the number of poles of the electrical machine -- or the stator ovalling frequency, for example. However, it might be more typical for several frequency components, or even the entire frequency spectrum, of the input and output data to be used to determine the effectiveness data, in particular so that the additional effects that are introduced by the anti-vibration mount are taken into consideration.

It will be readily appreciated that the processing of the input and output data to derive the successive sets of effectiveness data will be carried out a time intervals. These time intervals can be fixed and/or take into account other factors such as the amplitude of the vibration input. For example, processing to derive the effectiveness data can be carried out once an hour or once a day -- optionally using the input and output data collected continuously since the last processing event was carried out -- or after a severe transient event when it might be useful to measure the effectiveness of the anti-vibration mount in case it has been damaged. If fixed time intervals are used then the time between processing events can be set depending on the environment in which the anti-vibration mount is being used. For example, if the mount is being used to support system critical equipment then a shorter time between processing events may be preferred.

Using the input and output data to determine the effectiveness of the anti-vibration mount makes inherent use of its dynamic stiffness without having to make any direct measurements or calculations of the stiffness model. As the anti-vibration mount deteriorates over its service life, the amplitude of the output vibrations will approach, and in some cases may even exceed, the input vibrations as resonances are introduced by the mount.

The effectiveness data of the anti-vibration mount can be derived from the relationship between the input data and the output data at one or more frequencies. For example, the effectiveness E as a function of frequency can be determined by the equation:

$$E(f) = \frac{(A_{out}(f) - A_{in}(f))}{A_{in}(f)} \qquad\qquad (EQ1)$$

where:

A$_{in}$ is input data indicative of the amplitude of the input vibrations applied to the mount, and
A$_{out}$ is output data indicative of the amplitude of the output vibrations.

As noted above, the effectiveness data can be derived using the whole frequency spectra of the input and output data or just one or more frequency components or peaks within the frequency spectra. In the case where only one frequency component of the input and output data is used then the effectiveness data can be expressed as a numerical value which represents the dynamic stiffness characteristic of the mount for that frequency component and for the period of time over which the input and output data was collected. If more than one frequency component or the whole frequency spectra of the input and output data is used then the effectiveness data can be expressed as a function of frequency. Alternatively, further processing (e.g. an averaging step) can be carried out so that the effectiveness data can be expressed as a numerical value which represents the dynamic stiffness characteristic of the mount for the particular frequency components selected, and for the period of time over which the input and output data was collected. It is also possible to see how one or more peaks within the frequency spectra of the input and/or output data move over the service life of the mount. One example might be the frequency component that represents the standing wave frequency which can often provide useful information about the physical condition of the anti-vibration mount. Such movement might be monitored by applying a peak detection function or a modified Hilbert transform to the frequency spectrum of the output data, for example.

Once the effectiveness data for a particular time period has been determined then this can be used for condition monitoring of the anti-vibration mount. For example, it will be expected that effectiveness will decrease during the service life of the anti-vibration mount and so any existing effectiveness data can be extrapolated and used to predict when the mount might need to be maintained or replaced. Damage from severe transient events can also be monitored by noting step-changes in successive sets of effectiveness data, for example. If additional effects such as internal resonances, standing waves and mass effects that are produced by the anti-vibration mount are taken into consideration then they can be particularly useful in assessing disbands, porosity and cracks in the mount which might indicate damage.

In one arrangement the anti-vibration mount consists of a plurality of elastomeric layers interleaved with rigid plates. The elastomeric layers may be made of any suitable material such as rubber, rubber mix or polymer, for example. Similarly, the rigid plates may be made of a suitable material, although a rigid plate metal such as steel will generally be preferred. The anti-vibration mount will typically have a compression axis along which a component of compression loading is applied, in use, and a pair of orthogonal shear axes. A component of shear loading may be applied to the anti-vibration mount along one or both of the shear axes depending on the overall design of any external support frame or structure. The compression axis will typically be substantially normal to the plane of the various elastomeric layers and interleaved rigid plates and the shear axes will typically be substantially parallel to the plane of the various elastomeric layers and interleaved rigid plates.

If the anti-vibration mount is positioned between a stator assembly of a rotating electrical machine and an external support frame then it will typically be located with its compression axis (i.e. the axis normal to the plane of the elastomeric layers and interleaved rigid plates) aligned substantially with a tangent of the stator and one of its shear axis being aligned substantially with a radius of the stator. In this case the dynamic stiffness that is important is that for compression loading.

The step of determining the effectiveness data takes into account the operating temperature of the mount because this has an effect on the dynamic stiffness. In other words, the effectiveness data of the anti-vibration mount is 'normalised' for operating temperature. In one example then:

$$E_n(f) = E(f)k_t k_a \qquad \qquad \text{(EQ2)}$$

where:

E$_n$(f) is normalised effectiveness data,
$k_t$ is a factor that adjusts for temperature, and
$k_a$ is a factor that adjusts for amplitude.

In the case where the anti-vibration mount is positioned between a stator assembly of a rotating electrical machine and an external support frame then a temperature sensor can be used to measure the stator temperature or air flow temperature, for example. Temperature sensors are typically positioned at various locations in any electrical machine for general monitoring purposes and the measurements can simply be used by the processor unit when deriving the effectiveness data. Any suitable temperature sensor can be used.

The present invention further provides an apparatus for condition monitoring of an anti-vibration mount comprising: first means for measuring or deriving input data indicative of the amplitude of input vibrations that are applied to the anti-vibration mount; second means for measuring or deriving output data indicative of the amplitude of corresponding output vibrations of the anti-vibration mount; a processor unit adapted to determine a first set of effectiveness data indicative of the effectiveness of the anti-vibration mount using input and output data measured or derived over a first period of time, and a temperature sensor adapted to measure an operating temperature of the anti-vibration mount; the processor being further adapted to use a first operating temperature of the anti-vibration mount to normalise the first set of effectiveness data and to monitor the operating condition of the anti-vibration mount on the basis of the normalised first set of effectiveness data.

The processor unit can be further adapted to determine a second set of effectiveness data indicative of the effectiveness of the anti-vibration mount using input and output data measured or derived over a second period of time, different from the first period of time, to use a second operating temperature of the anti-vibration mount to normalise the second set of effectiveness data and to monitor the operating condition of the anti-vibration mount on the basis of the normalised first and second sets of effectiveness data. Further sets of effectiveness data can be determined in a similar manner as described above.

An assembly can include an anti-vibration mount and the apparatus described above.

The assembly can further comprise a stator assembly for a rotating electrical machine and an external support frame, the anti-vibration mount being located between the external support frame and a part of the stator assembly such that it experiences compression loading in a substantially tangential direction of the stator assembly and radial shear loading in a substantially radial direction of the stator assembly during operation of the rotating electrical machine.

Drawings

Figure 1 shows a perspective view of part of a stator assembly for a rotating electrical machine that is secured to an external support frame by means of a sandwich anti-vibration mount, the condition of which is monitored in accordance with the present invention;
Figure 2 shows acceleration data as a function of time;
Figure 3 shows acceleration data as a function of frequency;
Figure 4 shows normalised effectiveness data as a function of frequency;
Figure 5 shows how the dynamic stiffness of the mount varies with amplitude of the input vibrations applied to the mount;
Figure 6 shows how the dynamic stiffness of the mount varies with temperature of the mount; and

Figure 7 shows how normalised effectiveness data can be compared to provide condition monitoring of the mount.

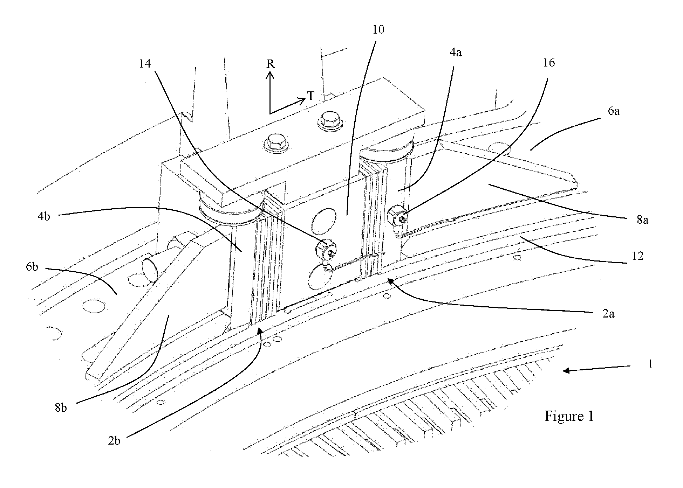

Figure 1 shows part of a stator assembly 1 for a rotating electrical machine, e.g. a motor or generator.

An external support frame is located outside the stator assembly 1. Each axial end of the stator assembly is indirectly connected to structural members of the external support frame at separate mounting locations that are typically spaced around the circumference of the stator assembly.

Each mounting location includes a pair of co-located mounts 2a, 2b. One mount in each pair experiences an increased compression load when a rotor (not shown) rotates within the stator assembly 1 in a first direction and the other mount in each pair experiences an increased compression load when the rotor rotates in an opposite direction. A first sandwich anti-vibration mount 2a includes a rigid end support member that includes a reaction plate 4a, a mounting plate 6a and a support bracket 8a. Similarly, a second sandwich anti-vibration mount 2b includes a rigid end support member that includes a reaction plate 4b, a mounting plate 6b and a support bracket 8b. The mounting plates 6a, 6b include openings to enable the end support members to be mechanically secured to circumferentially-spaced parts of the external support frame 12 by bolts.

A rigid intermediate support member 10 is located between the first and second mounts 2a, 2b and is mechanically secured to the stator assembly 1.

The first and second mounts 2a, 2b have three elastomeric layers interleaved with two intermediate rigid plates. The elastomeric layers and interleaved rigid plates are located between the reaction plates 4a, 4b and oppositely facing surfaces of the intermediate support member 10 and shown in Figure 1.

It will be readily appreciated that there is no direct physical connection between the stator assembly 1 and the external support frame 12. More particularly, the indirect connection between the stator assembly 1 and the structural members of the external support frame 12 is made through the intermediate support member 10 and the end support members of the first and second mounts 2a, 2b at each mounting location. Any relative movement between the stator assembly 1 and the external support frame 12 in the radial direction (R) is experienced by the co-located mounts as radial shear loading along their radial shear axes and any relative movement between the stator assembly and the external support frame in the tangential direction (T) is experienced by one of the co-located mounts as an increased compression load (i.e. a compression load that is greater than the steady-state compression load) and by the other mount as a reduced compression load that is less than the steady-state compression load.

In use, the mounts 2a, 2b receive input vibrations from the stator assembly 1 -- in the form of transient compression loads -- through the intermediate support member 10 and these are transferred into the external support frame 12. A first high-frequency accelerometer 14 is mounted on the intermediate support member 10 and provides acceleration data indicative of the input vibrations applied to the first mount 2a. A second high-frequency accelerometer 16 is mounted on the reaction plate 4a of the first mount 2a and provides acceleration data indicative of the output vibrations, i.e. the vibrations that are transferred through the mount to the external support frame 12. Although not shown, a third high-frequency accelerometer can be mounted on the reaction plate 4b of the second mount 2b to provide condition monitoring of the second mount. It will also be readily appreciated that the accelerometers 14, 16 can be mounted at other locations on the stator assembly and the external support frame, and can also be physically incorporated within the actual mount.

The accelerometers 14, 16 are connected to a processor unit (not shown) by cables. Input and output data from the accelerometers 14, 16 is provided to the processor unit which carries out the processing for determining the condition monitoring of the first mount 2a. The processor unit can be a stand-alone unit or can be integrated with a processor unit or that is used for general monitoring and/or control of the electrical machine.

The process of determining the effectiveness of the first mount 2a and how this can be used to monitor its operating condition will now be explained in more detail.

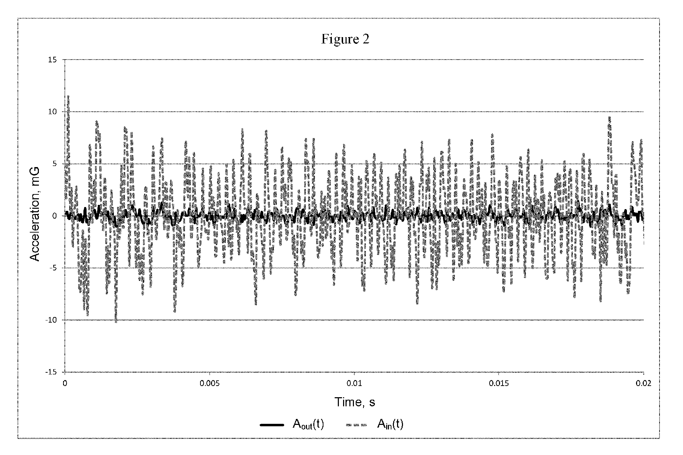

Figure 2 shows raw acceleration data that is received from both accelerometers 14.16 over a period of 0.02 s. In practice, acceleration data will typically be obtained for a much longer period of time while the electrical machine is operating and can be stored in a suitable memory until it is processed. It can be seen that the amplitude of the input vibrations $A_{in}$ (i.e. the acceleration data provided by the first accelerometer 14 that is mounted to the intermediate support member 10) is much greater than the amplitude of the corresponding output vibrations $A_{out}$ (i.e. the acceleration data provided by the second accelerometer 16) because of the dynamic stiffness of the first mount 2a for compression loading.

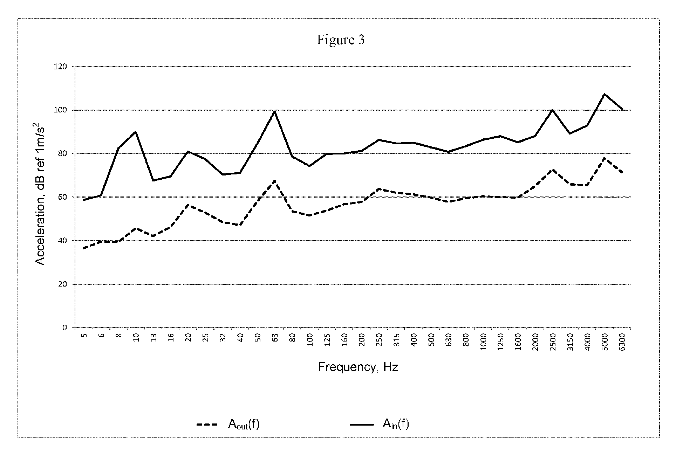

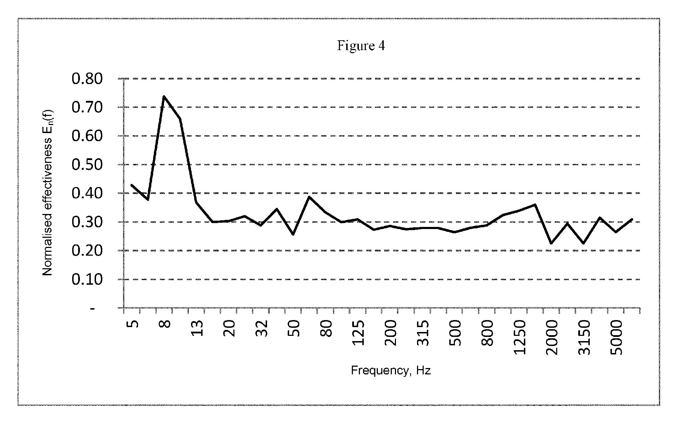

Figure 3 shows the acceleration data after it has been converted from the time domain to the frequency domain using an appropriate transform. It can be seen that the anti-vibration mount is particularly effective at minimising the transfer of vibrations at certain frequencies, e.g. between about 6 and 12 Hz. This can also be seen in Figure 4 which is described in more detail below. The differences in the effectiveness of the mount are caused by its dynamic stiffness characteristics.

Figure 4 shows normalised effectiveness data derived from the acceleration data. The normalised effectiveness $E_n$ as a function of frequency can be determined by the equation:

$$E_n(f) = \left( \frac{(A_{out}(f) - A_{in}(f))}{A_{in}(f)} \right) k_t k_a \qquad\qquad \text{(EQ3)}$$

where:

$A_{in}$ is the acceleration data for the input vibrations applied to the first mount 2a,
$A_{out}$ is the acceleration data for the output vibrations,
$k_t$ is a factor that adjusts for temperature, and
$k_a$ is a factor that adjusts for amplitude.

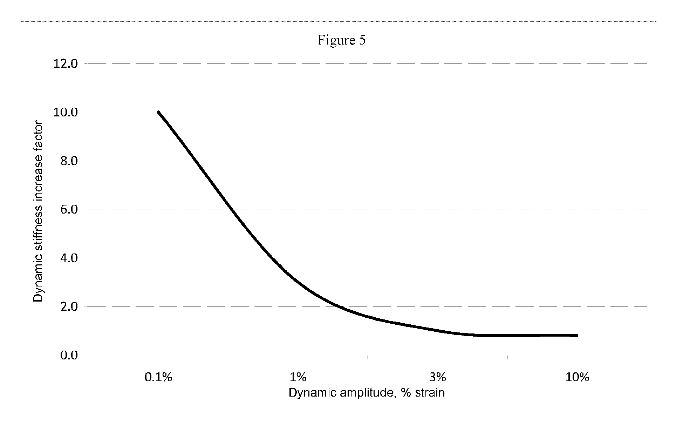

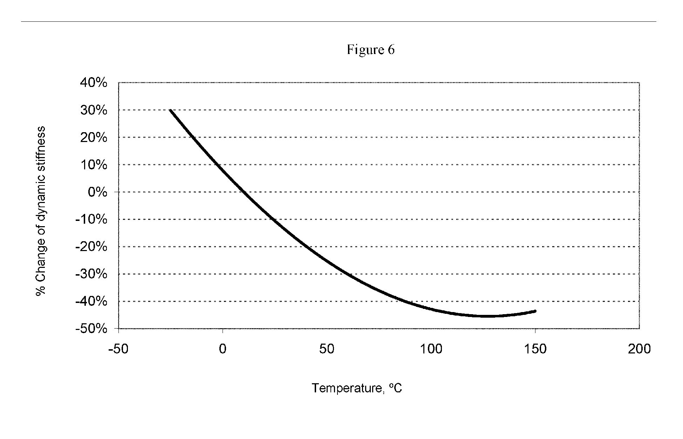

As noted above, the effectiveness of the first mount 2a will depend on its dynamic stiffness, which depends on the amplitude of the input vibrations and the operating temperature of the mount. Figures 5 and 6 show how dynamic stiffness varies with amplitude and temperature, respectively. The temperature factor $k_t$ can be based on a measured temperature provided by a temperature sensor (not shown) located at or adjacent the first mount 2a. The effectiveness data shown in Figure 4 is therefore 'normalised' for an operating temperature of 90°C and amplitude of about 1%.

The operating condition of the first mount 2a can then be monitored by comparing effectiveness data determined periodically at time intervals.

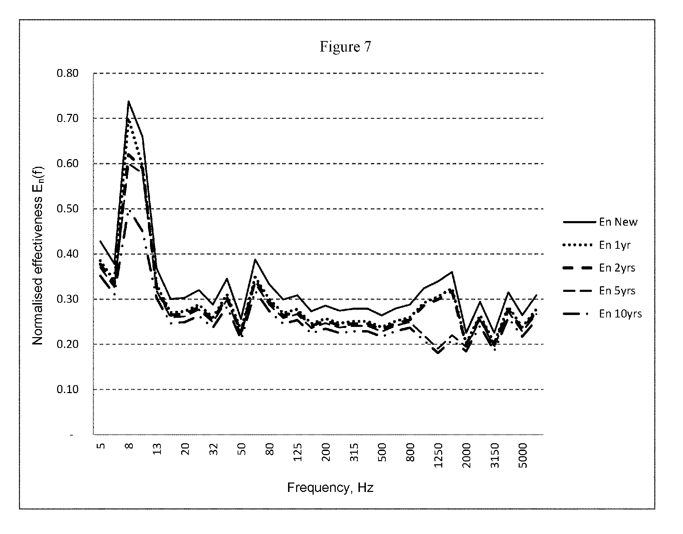

Figure 7 shows successive sets of normalised effectiveness data determined using acceleration data collected when the first mount 2a was installed in the stator assembly and then after 1 year, 2 years, 5 years and 10 years of service life. For example, acceleration data can be collected for a particular period of time when the mount is first installed and this is used to determine a first set of effectiveness data labelled 'En new' in Figure 7. Acceleration data is then collected for a particular period of time after 1 year of service life and this is used to determine a second set of effectiveness data labelled 'En 1 year' in Figure 7. Acceleration data is then collected for a particular period of time after 2 years of service life and this is used to determine a third set of effectiveness data labelled 'En 2 years' in Figure 7. Acceleration data is then collected for a particular period of time after 5 years of service life and this is used to determine a fourth set of effectiveness data labelled 'En 5 years' in Figure 7. Finally, acceleration data is collected for a particular period of time after 10 years of service life and this is used to determine a fifth set of effectiveness data labelled 'En 10 years' in Figure 7.

If the sets of effectiveness data are compared then it can be seen that there is a general reduction in the effectiveness of the first mount 2a as a result of its physical deterioration. For example, the reduction in effectiveness at a frequency of about 8 Hz can be attributed to the breakdown in the base polymer that forms the elastomeric layers of the mount due to aging. The reduction in effectiveness at a frequency of about 1250 Hz can be attributed to damage suffered by the first mount 2a during its service life and which changes its dynamic response. The reduction in effectiveness can be monitored in this way without the need to visually inspect or monitor the condition of the mount. The future effectiveness of the mount can be extrapolated using the existing effectiveness data to predict when the first mount 2a might need to be maintained or replaced, e.g. if the effectiveness at a certain frequency is likely to fall below a certain threshold or some other minimum operating condition is exceeded. Replacement of the first mount 2a can be scheduled to coincide with routine maintenance of the electrical machine so that non-operational time can be minimised.

It is also possible to provide condition monitoring of the first mount 2a by processing or analysing a single set of effectiveness data, i.e. without comparing it against existing effectiveness data or making any attempt to extrapolate the future effectiveness of the mount. In the case of the sets of effectiveness data shown in Figure 7, each set could be processed to see if the first mount 2a is meeting minimum requirements for dynamic stiffness, for example. This could be done by applying a threshold to the normalised effectiveness data. In one example, steps could be taken to schedule maintenance or replacement of the mount if the normalised effectiveness at a frequency of about 8 Hz falls below a threshold value of 0.50. In this case, it can be seen that the fifth set of effectiveness data collected after a service life of 10 years would be at about this threshold value and the first mount 2a could then be replaced before it suffers any further breakdown in the base polymer that forms the elastomeric layers. A similar threshold value could also be applied at a frequency of about 1250 Hz which provides an indication of the damage caused during normal operation of the first mount 2a during its service life.

## Claims

1. Condition monitoring of an anti-vibration mount (2a) comprising the steps of:

    determining a first set of effectiveness data indicative of the effectiveness of the anti-vibration mount (2a) by:

measuring or deriving input data indicative of the amplitude of input vibrations that are applied to the anti-vibration mount (2a) and output data indicative of the amplitude of corresponding output vibrations of the anti-vibration mount (2a), the input and output data being measured or derived over a first period of time; and using the input and output data to determine the first set of effectiveness data; and

**characterised by** the steps of:

measuring or deriving a first operating temperature of the anti-vibration mount (2a); using the first operating temperature to normalise the first set of effectiveness data; and monitoring the operating condition of the anti-vibration mount (2a) on the basis of the normalised first set of effectiveness data.

2. Condition monitoring according to claim 1, further comprising the steps of:

determining a second set of effectiveness data indicative of the effectiveness of the anti-vibration mount (2a) by:

measuring or deriving input data indicative of the amplitude of input vibrations that are applied to the anti-vibration mount (2a) and output data indicative of the amplitude of corresponding output vibrations of the anti-vibration mount (2a), the input and output data being measured or derived over a second period of time, different from the first period of time; and using the input and output data measured or derived over the second period of time to determine the second set of effectiveness data; and

measuring or deriving a second operating temperature of the anti-vibration mount (2a); using the second operating temperature to normalise the second set of effectiveness data; and monitoring the operating condition of the anti-vibration mount (2a) on the basis of the normalised first and second sets of effectiveness data.

3. Condition monitoring according to claim 2, wherein the step of monitoring the operating condition of the anti-vibration mount (2a) includes comparing and/or extrapolating the first and second sets of effectiveness data.

4. Apparatus for condition monitoring of an anti-vibration mount comprising:

first means (14) for measuring or deriving input data indicative of the amplitude of input vibrations that are applied to the anti-vibration mount (2a); second means (16) for measuring or deriving output data indicative of the amplitude of corresponding output vibrations of the anti-vibration mount (2a); a processor unit adapted to determine a first set of effectiveness data indicative of the effectiveness of the anti-vibration mount (2a) using input and output data measured or derived over a first period of time; and a temperature sensor adapted to measure an operating temperature of the anti-vibration mount (2a); and **characterised in that** the processor unit is adapted to use a first operating temperature of the anti-vibration mount (2a) to normalise the first set of effectiveness data and to monitor the operating condition of the anti-vibration mount (2a) on the basis of the normalised first set of effectiveness data.

5. Apparatus according to claim 4, wherein the processor unit is further adapted to determine a second set of effectiveness data indicative of the effectiveness of the anti-vibration mount (2a) using input and output data measured or derived over a second period of time, different from the first period of time, to use a second operating temperature of the anti-vibration mount (2a) to normalise the second set of effectiveness data and to monitor the operating condition of the anti-vibration mount (2a) on the basis of the normalised first and second sets of effectiveness data.

6. Apparatus according to claim 4 or claim 5, wherein the first and second means include accelerometers (14, 16) located at or adjacent the anti-vibration mount.

7. An assembly comprising:

an anti-vibration mount (2a); and an apparatus according to any of claims 4 to 6.

8. An assembly according to claim 7, wherein the anti-vibration mount (2a) consists of a plurality of elastomeric layers interleaved with rigid plates.

9. An assembly according to claim 7 or claim 8, further comprising a stator assembly (1) for a rotating electrical machine and an external support frame (12), the anti-vibration mount (2a) being located between the external support frame (12) and a part of the stator assembly (1) such that it experiences compression loading in a substantially tangential direction of the stator assembly (1) and radial shear loading in a substantially radial direction of the stator assembly (1) during operation of the rotating electrical machine.

**Patentansprüche**

1. Zustandsüberwachung eines Schwingungsdämpfungslagers (2a), die die Schritte aufweist:

Bestimmen eines ersten Satzes von Effektivitätsdaten, die die Effektivität des Schwingungsdämpfungslagers (2a) kennzeichnen, durch:

Messen oder Ableiten von Eingangsdaten, die die Amplitude von Eingangsschwingungen kennzeichnen, die auf das Schwingungsdämpfungslager (2a) einwirken, und Ausgangsdaten, die die Amplitude von entsprechenden ausgegebenen Schwingungen des Schwingungsdämpfungslagers (2a) kennzeichnen, wobei die Eingangs- und Ausgangsdaten über einen ersten Zeitraum hinweg gemessen oder abgeleitet werden; und
Verwenden der Eingangs- und Ausgangsdaten, um den ersten Satz von Effektivitätsdaten zu bestimmen; und

**gekennzeichnet durch** die Schritte:

Messen oder Ableiten einer ersten Betriebstemperatur des Schwingungsdämpfungslagers (2a);
Verwenden der ersten Betriebstemperatur, um den ersten Satz von Effektivitätsdaten zu normieren; und
Überwachen des Betriebszustands des Schwingungsdämpfungslagers (2a) auf der Basis des normierten ersten Satzes von Effektivitätsdaten.

2. Zustandsüberwachung nach Anspruch 1, die ferner die Schritte aufweist:

Bestimmen eines zweiten Satzes von Effektivitätsdaten, die die Effektivität des Schwingungsdämpfungslagers (2a) kennzeichnen, durch:

Messen oder Ableiten von Eingangsdaten, die die Amplitude von Eingangsschwingungen, die auf das Schwingungsdämpfungslager (2a) einwirken, und Ausgangsdaten, die die Amplitude entsprechender ausgegebener Schwingungen des Schwingungsdämpfungslagers (2a) kennzeichnen, wobei die Eingangs- und Ausgangsdaten über einen zweiten Zeitraum hinweg, der sich von dem ersten Zeitraum unterscheidet, gemessen oder abgeleitet werden; und
Verwenden der Eingangs- und Ausgangsdaten, die über den zweiten Zeitraum hinweg gemessen oder abgeleitet werden, um den zweiten Satz von Effektivitätsdaten zu bestimmen; und

Messen oder Ableiten einer zweiten Betriebstemperatur des Schwingungsdämpfungslagers (2a);
Verwenden der zweiten Betriebstemperatur, um den zweiten Satz von Effektivitätsdaten zu normieren; und
Überwachen des Betriebszustands des Schwingungsdämpfungslagers (2a) auf der Basis des normierten ersten und zweiten Satzes von Effektivitätsdaten.

3. Zustandsüberwachung nach Anspruch 2, wobei der Schritt des Überwachens des Betriebszustands des Schwingungsdämpfungslagers (2a) ein Vergleichen und/oder Extrapolieren des ersten und zweiten Satzes von Effektivitätsdaten enthält.

4. Vorrichtung zur Zustandsüberwachung eines Schwingungsdämpfungslagers, die aufweist:

eine erste Einrichtung (14) zur Messung und Ableitung von Eingangsdaten, die die Amplitude von Eingangsschwingungen kennzeichnen, die auf das Schwingungsdämpfungslager (2a) einwirken;

eine zweite Einrichtung (16) zur Messung oder Ableitung von Ausgangsdaten, die die Amplitude entsprechender ausgegebener Schwingungen des Schwingungsdämpfungslagers (2a) kennzeichnen;

eine Prozessoreinheit, die eingerichtet ist, um einen ersten Satz von Effektivitätsdaten, die die Effektivität des Schwingungsdämpfungslagers (2a) kennzeichnen, unter Verwendung von Eingangs- und Ausgangsdaten, die über einen ersten Zeitraum hinweg gemessen oder abgeleitet werden, zu bestimmen; und

einen Temperatursensor, der eingerichtet ist, um eine Betriebstemperatur des Schwingungsdämpfungslagers (2a) zu messen; und

**dadurch gekennzeichnet, dass** die Prozessoreinheit eingerichtet ist, um eine erste Betriebstemperatur des Schwingungsdämpfungslagers (2a) zu verwenden, um den ersten Satz von Effektivitätsdaten zu normieren, und um den Betriebszustand des Schwingungsdämpfungslagers (2a) auf der Basis des normierten ersten Satzes von Effektivitätsdaten zu überwachen.

5. Vorrichtung nach Anspruch 4, wobei die Prozessoreinheit ferner eingerichtet ist, um einen zweiten Satz von Effektivitätsdaten, die die Effektivität des Schwingungsdämpfungslagers (2a) kennzeichnen, unter Verwendung von Eingangs- und Ausgangsdaten zu bestimmen, die über einen zweiten Zeitraum, der sich von dem ersten Zeitraum unterscheidet, hinweg gemessen oder abgeleitet werden, eine zweite Betriebstemperatur des Schwingungsdämpfungslagers (2a) zu verwenden, um den zweiten Satz von Effektivitätsdaten zu normieren, und den Betriebszustand des Schwingungsdämpfungslagers (2a) auf der Basis des normierten ersten und zweiten Satzes von Effektivitätsdaten zu überwachen.

6. Vorrichtung nach Anspruch 4 oder 5, wobei die erste und die zweite Einrichtung Beschleunigungsmesser (14, 16) enthalten, die an oder benachbart zu dem Schwingungsdämpfungslager angeordnet sind.

7. Anordnung, die aufweist:

ein Schwingungsdämpfungslager (2a); und
eine Vorrichtung nach einem beliebigen der Ansprüche 4 bis 6.

8. Anordnung nach Anspruch 7, wobei das Schwingungsdämpfungslager (2a) aus mehreren elastomeren Schichten, die mit festen Platten überlappt sind, besteht.

9. Anordnung nach Anspruch 7 oder Anspruch 8, die ferner eine Statoranordnung 1 für eine elektrische Rotationsmaschine und einen externen Tragrahmen (12) aufweist, wobei das Schwingungsdämpfungslager (2a) zwischen dem externen Tragrahmen (12) und einem Teil der Statoranordnung (1) derart angeordnet ist, dass es während eines Betriebs der elektrischen Rotationsmaschine eine Druckbelastung in einer im Wesentlichen tangentialen Richtung der Statoranordnung (1) und eine radiale Scherbelastung in einer im Wesentlichen radialen Richtung der Statoranordnung (1) erfährt.

**Revendications**

1. Surveillance de l'état d'un élément de suspension antivibratoire (2a) comprenant les étapes suivantes :

déterminer un premier ensemble de données d'efficacité indicatives de l'efficacité de l'élément de suspension antivibratoire (2a) par les opérations suivantes :

mesurer ou déduire des données d'entrée indicatives de l'amplitude de vibrations d'entrée qui sont appliquées à l'élément de suspension antivibratoire (2a) et des données de sortie indicatives de l'amplitude de vibrations de sortie correspondantes de l'élément de suspension antivibratoire (2a), les données d'entrée et de sortie étant mesurées ou déduites sur un premier intervalle de temps ; et
utiliser les données d'entrée et de sortie pour déterminer le premier ensemble de données d'efficacité ; et

**caractérisée par** les étapes suivantes :

mesurer ou déduire une première température de fonctionnement de l'élément de suspension antivibratoire (2a) ;
utiliser la première température de fonctionnement pour normaliser le premier ensemble de données d'efficacité ; et

surveiller l'état de fonctionnement de l'élément de suspension antivibratoire (2a) en se basant sur le premier ensemble de données d'efficacité normalisé.

2. Surveillance d'état selon la revendication 1, comprenant en outre les étapes suivantes :

déterminer un deuxième ensemble de données d'efficacité indicatives de l'efficacité de l'élément de suspension antivibratoire (2a) par les opérations suivantes :

mesurer ou déduire des données d'entrée indicatives de l'amplitude de vibrations d'entrée qui sont appliquées à l'élément de suspension antivibratoire (2a) et des données de sortie indicatives de l'amplitude de vibrations de sortie correspondantes de l'élément de suspension antivibratoire (2a), les données d'entrée et de sortie étant mesurées ou déduites sur un deuxième intervalle de temps, différent du premier intervalle de temps ; et
utiliser les données d'entrée et de sortie mesurées ou déduites sur le deuxième intervalle de temps pour déterminer le deuxième ensemble de données d'efficacité ; et
mesurer ou déduire une deuxième température de fonctionnement de l'élément de suspension antivibratoire (2a) ;
utiliser la deuxième température de fonctionnement pour normaliser le deuxième ensemble de données d'efficacité ; et
surveiller l'état de fonctionnement de l'élément de suspension antivibratoire (2a) en se basant sur les premier et deuxième ensembles de données d'efficacité normalisés.

3. Surveillance d'état selon la revendication 2, dans laquelle l'étape de surveillance de l'état de fonctionnement de l'élément de suspension antivibratoire (2a) comprend la comparaison et/ou l'extrapolation des premier et deuxième ensembles de données d'efficacité.

4. Dispositif de surveillance de l'état d'un élément de suspension antivibratoire comprenant :

un premier moyen (14) pour mesurer ou déduire des données d'entrée indicatives de l'amplitude de vibrations d'entrée qui sont appliquées à l'élément de suspension antivibratoire (2a) ;
un deuxième moyen (16) pour mesurer ou déduire des données de sortie indicatives de l'amplitude de vibrations de sortie correspondantes de l'élément de suspension antivibratoire (2a) ;
une unité de processeur adaptée pour déterminer un premier ensemble de données d'efficacité indicatives de l'efficacité de l'élément de suspension antivibratoire (2a) en utilisant des données d'entrée et de sortie mesurées ou déduites sur un premier intervalle de temps ; et
un capteur de température adapté pour mesurer une température de fonctionnement de l'élément de suspension antivibratoire (2a) ; et
**caractérisé en ce que** l'unité de processeur est adaptée pour utiliser une première température de fonctionnement de l'élément de suspension antivibratoire (2a) pour normaliser le premier ensemble de données d'efficacité et pour surveiller l'état de fonctionnement de l'élément de suspension antivibratoire (2a) en se basant sur le premier ensemble de données d'efficacité normalisé.

5. Dispositif selon la revendication 4, dans lequel l'unité de processeur est adaptée en outre pour déterminer un deuxième ensemble de données d'efficacité indicatives de l'efficacité de l'élément de suspension antivibratoire (2a) en utilisant des données d'entrée et de sortie mesurées ou déduites sur un deuxième intervalle de temps, différent du premier intervalle de temps, pour utiliser une deuxième température de fonctionnement de l'élément de suspension antivibratoire (2a) pour normaliser le deuxième ensemble de données d'efficacité et pour surveiller l'état de fonctionnement de l'élément de suspension antivibratoire (2a) en se basant sur les premier et deuxième ensembles de données d'efficacité normalisés.

6. Dispositif selon la revendication 4 ou 5, dans lequel les premier et deuxième moyens comprennent des accéléromètres (14, 16) situés sur ou au voisinage de l'élément de suspension antivibratoire.

7. Ensemble comprenant :

un élément de suspension antivibratoire (2a) ; et
un dispositif selon l'une quelconque des revendications 4 à 6.

**8.** Ensemble selon la revendication 7, dans lequel l'élément de suspension antivibratoire (2a) est constitué d'une pluralité de couches élastomères intercalées avec des plaques rigides.

**9.** Ensemble selon la revendication 7 ou 8, comprenant en outre un ensemble de stator (1) pour une machine électrique rotative et un cadre de support extérieur (12), l'élément de suspension antivibratoire (2a) étant situé entre le cadre de support extérieur (12) et une partie de l'ensemble de stator (1), de sorte qu'il subit un effort de compression dans une direction substantiellement tangentielle de l'ensemble de stator (1) et un effort de cisaillement radial dans une direction substantiellement radiale de l'ensemble de stator (1) pendant le fonctionnement de la machine électrique rotative.

EP 2 629 071 B1

Figure 1

Figure 2

Figure 3

Figure 4

Figure 5

Figure 6

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2267871 A

**Non-patent literature cited in the description**

- Sensing methodologies to determine automotive damper condition under vehicle normal operation. **FERREIRA C. et al.** Sensors and Actuators A: Physical. Elsevier Sequoia S.A, 01 November 2009, vol. 156, 237-244
- Methods for evaluating and monitoring the effectiveness of vibration mounts on the basis of the reciprocity principle. **EKIMOV A. E. et al.** Soviet Physics Acoustics. American Institute of Physics, 01 January 1989, vol. 35, 24-26

- **COLEMAN D. M. et al.** Design of a large, rigid, modular optical bed for versatile optical and spectroscopic experimentation. *Spectrochemica Acta. Part B: Atomic Spectroscopy,* 01 January 1978, vol. 33 (5), 127-142